(19) Europäisches Patentamt
European Patent Office
Office européen des brevets

(11) **EP 1 997 215 B1**

(12) **EUROPÄISCHE PATENTSCHRIFT**

(45) Veröffentlichungstag und Bekanntmachung des Hinweises auf die Patenterteilung:
**13.03.2013 Patentblatt 2013/11**

(21) Anmeldenummer: 07726203.8

(22) Anmeldetag: **18.01.2007**

(51) Int Cl.:
***H02K 23/20*** *(2006.01)*

(86) Internationale Anmeldenummer:
**PCT/EP2007/050483**

(87) Internationale Veröffentlichungsnummer:
**WO 2007/104591 (20.09.2007 Gazette 2007/38)**

(54) **ELEKTRISCHE MASCHINE**

ELECTRICAL MACHINE

MACHINE ÉLECTRIQUE

(84) Benannte Vertragsstaaten:
**DE FR**

(30) Priorität: **14.03.2006 DE 102006011547**

(43) Veröffentlichungstag der Anmeldung:
**03.12.2008 Patentblatt 2008/49**

(73) Patentinhaber: **Robert Bosch GmbH**
**70442 Stuttgart (DE)**

(72) Erfinder:
• **WEIGOLD, Thomas**
**76532 Baden-Baden (DE)**
• **SCHNEIDER, Christian**
**77886 Lauf (DE)**
• **SAUM, Andreas**
**77815 Buehl (DE)**

(56) Entgegenhaltungen:
**EP-A1- 1 220 428      WO-A-2005/076442**
**US-A1- 2005 218 750**

EP 1 997 215 B1

**Beschreibung**

Stand der Technik

Die Erfindung betrifft eine elektrische Maschine, insbesondere eine Gleichstrommaschine, nach dem Oberbegriff des Anspruchs 1.

Aus WO 2005/076442 A ist ein elektrischer Motor mit einer symmetrisch angeordneten Ankerwicklung bekannt. Die symmetrisch angeordnete Ankerwicklung besteht aus einer ersten Spule, die zwischen zwei beliebigen Ankernuten gewickelt ist und an benachbarten Kommutatorlamellen elektrisch kontaktiert ist. Eine zweite Spule ist zwischen zwei Ankernuten gewickelt, die zu den beiden Ankernuten der ersten Spule in Bezug auf den Mittelpunkt der Ankerwelle in punktsymmetrischer Stellung stehen und in entgegengesetzter Richtung gewickelt ist. Bei dem Motor ist die Anzahl der Ankernuten gleich der Anzahl der Kommutatorlamellen. Der Motor hat je eine Bürste für hohe und niedrige Geschwindigkeiten sowie eine gemeinsame Bürste. Die erste und zweite Spule sind derart angeordnet, dass sie sich in einer symmetrischen Stellung zu einer den Mittelpunkt der Bürste für hohe Geschwindigkeiten und den Mittelpunkt der Drehwelle durchgehenden Achse befinden, wenn die Bürste für hohe Geschwindigkeiten in Kontakt mit der benachbarten Kommutatorlamelle kommt und dadurch die erste Spule mit der zweiten Spule kurzgeschlossen wird.

Die Anordnung der Bürsten bezüglich der symmetrisch zueinander angeordneten ersten und zweiten Spule gemäß WO 2005/076442 hat den Nachteil, dass jeweils ein Schaltleiter jeder Spule direkt von der Ankernut an den Kommutator geführt wird. Unter einem Schaltleiter wird dabei der Abschnitt eines Spulendrahts verstanden, der von der Spule an den Kommutator geführt wird. Dies bedeutet, dass dieser Schaltleiter zwischen Spule und Kommutatorhaken quasi frei gespannt ist. Der gespannte Schaltleiter versperrt so den Platz für die nachfolgenden Schaltleiter der übrigen Spulen. Dies führt zu einem großen Wickelkopfaufbau und ggf. zu Drahtbruch an den Kommutatorhaken der gespannten Schaltleiter unter Schwingbelastung, was zu Feldausfällen führen kann.

Offenbarung der Erfindung

Die erfindungsgemäße elektrische Maschine umfasst einen Anker mit Ankernuten zur Aufnahme von Ankerspulen. Wenigstens eine Ankerspule ist aus zwei bezüglich einer Symmetrieachse, die durch den Mittelpunkt der Ankerwelle des Ankers verläuft, symmetrisch zueinander angeordnete Teilspulen gebildet, wobei die Teilspulen mit zwei benachbarten Kommutatorlamellen eines Kommutators verbunden sind. Dies bedeutet, dass die Ankerspulen so ausgebildet sind, dass jeweils zwei Teilspulen bezüglich einer Symmetrieachse, die durch den Mittelpunkt der Drehachse des Ankers verläuft, symmetrisch zueinander angeordnet sind. Die beiden symmetrisch zueinander angeordneten Teilspulen sind mit zwei benachbarten Kommutatorlamellen eines Kommutators verbunden. Die elektrische Maschine umfasst ferner eine erste Bürste, eine zweite Bürste und eine dritte Bürste, welche gleitbar an dem Kommutator anliegen, wobei die zweite Bürste mit der ersten Bürste oder der dritten Bürste zusammenwirkt. Erfindungsgemäß ist die dritte Bürste relativ zu den beiden Teilspulen derart angeordnet, dass beim Kontaktieren der beiden benachbarten Kommutatorlamellen die dritte Bürste mit dem Mittelpunkt der Drehachse eine Achse bildet, welche zu der Symmetrieachse der beiden Teilspulen einen Winkel von

$$90° - (180°/\text{Lamellenanzahl}) - (180°/3 \cdot \text{Lamellenanzahl})$$

bis

$$90° + (180°/\text{Lamellenanzahl}) + (180°/3 \cdot \text{Lamellenanzahl})$$

bildet.

Beträgt die Anzahl der Lamellen z.B. 12, so liegt der Winkel in einem Bereich von 90°-15°-5° bis 90°+15°+5°, bevorzugt in einem Bereich von 90°-15°-4° bis 90°+15°+4°, besonders bevorzugt von 90°-15°-2° bis 90°+15°+2°. Der Winkel beträgt beispielsweise 90°+15°+/-4°.

Erfindungsgemäß steht die Achse, die durch die dritte Bürste und den Mittelpunkt der Drehachse geht, wenn die dritte Bürste die beiden benachbarten Kommutatorlamellen kontaktiert, so dass die beiden Teilspulen kurzgeschlossen sind, im Wesentlichen senkrecht, d.h. 90°, zu der Symmetrieachse der beiden Teilspulen.

Die beiden Schaltleiter der beiden symmetrischen Teilspulen in Reihenschaltung bzw. die vien Schaltleiter der beiden Teilspulen in Parallelschaltung werden nach dem Austreten aus der Ankernut um ca. 180° um die Ankerwelle geführt, bevor sie mit den jeweiligen Kommutatorhaken verbunden werden. Dadurch ist gewährleistet, dass die Schaltleiter nicht frei gespannt sind, sondern in ihrer gesamten Länge entweder auf der Ankerwelle oder auf Schaltleitern von zuvor gewickelten Spulen liegen. Diese zumindest teilweise Umwicklung der Ankerwelle durch die Spulenenden im Bereich des Wickelkopfes zwischen Anker und Kommutator wird auch als Umhakenwicklung bezeichnet.

Die erfindungsgemäße elektrische Maschine hat den Vorteil, dass der Wickelkopf zwischen Anker und Kommutator im Vergleich zum Stand der Technik stabiler und kompakter aufgebaut ist. Durch die Umhakenwicklung wird insbesondere das Schwingen der Schaltleiter unter Schüttelbelastung vermieden, wodurch Drahtbruch an den Schaltleitern vermieden wird. Dies bedingt insgesamt einen robusteren Wickelkopfaufbau und ein reduziertes Feldrisiko.

Gegenüber dieser im Wesentlichen senkrechten Anordnung zwischen der Achse, die durch die dritte Bürste und den Mittelpunkt der Drehachse geht, wenn die dritte Bürste die beiden benachbarten Kommutatorlamellen kontaktiert, und der Symmetrieachse der beiden Teilspulen ist der Kommutator relativ zu dem Anker vorzugsweise zusätzlich um einen Winkel im Bereich von

$$+/-\ (180°/\text{Lamellenanzahl} + 180°/3 \cdot \text{Lamellenanzahl})$$

gedreht. Dies bewirkt eine geringfügige Erhöhung bzw. Erniedrigung der Drehzahl der elektrischen Maschine, mit der eine Feinabstimmung der Drehzahl gelingt.

Bei der Auslegung der Ankerwicklung wird zunächst aufgrund der Drehzahlanforderung der geringeren Drehzahlstufe die Anzahl der Leiter, d.h. die Anzahl der Wicklungen, pro Ankernut und die Spulendrahtstärke festgelegt. Die Drehzahl der höheren Drehzahlstufe in Relation zu der Drehzahl der geringeren Drehzahlstufe, der sogenannte Drehzahlsprung, wird durch die Winkelposition der dritten Bürste in Relation zu ersten Bürste festgelegt, wodurch bei unveränderter geringer Drehzahlstufe die höhere Drehzahlstufe grob auf den gewünschten Wert eingestellt werden kann. Diese Winkelposition ist typischerweise in einem Werkzeug festgelegt und liegt damit in der Regel für eine ganze Baureihe einer elektrischen Maschine fest und ist nur mittels einer Werkzeugänderung veränderbar.

Eine Feinabstimmung des Drehzahlsprungs kann durch eine zusätzliche Kommutatorverdrehung um einen Winkel von - (180°/3·Lamellenanzahl) bis + (180°/3·Lamellenanzahl) erreicht werden. Eine Kommutatorverdrehung um etwa 1° bewirkt beispielsweise eine Veränderung der höheren Drehzahlstufe um etwa 1 Umdrehung pro Minute.

Die erfindungsgemäße elektrische Maschine weist drei Bürsten auf. Die erste und zweite Bürste sind im Wesentlichen diametral zueinander angeordnet. Die dritte Bürste ist radial zwischen den einander gegenüberliegenden Bürsten angeordnet, so dass die dritte Bürste gegenüber der ersten Bürste in Drehrichtung um einen bestimmten Winkel kleiner als 180°, z.B. 70°, versetzt angeordnet ist. Dabei werden in der niedrigen Drehzahlstufe die beiden einander gegenüber liegenden Bürsten, d.h. die erste und zweite Bürste, bestromt, während die dritte Bürste stromlos ist. In der hohen Drehzahlstufe werden die zweite und die dritte Bürste bestromt, wohingegen die erste Bürste stromlos ist. Die zweite Bürste bildet demnach die gemeinsame Bürste, welche bei niedrigen Drehzahlen mit der ersten Bürste und bei hohen Drehzahlen mit der dritten Bürste zusammenwirkt. Die jeweils unbestromte Bürste verbindet jeweils zwei benachbarte Kommutatorlamellen. Sie schließt dadurch bei einer herkömmlichen Wicklung die dazwischen liegende Spule kurz, wobei sich ein Kurzschlussstrom ausbildet, der dem Speisestrom entgegen gesetzt gerichtet ist und zu einer Radialkraft auf den Anker führt. Diese Radialkraft wird bei der erfindungsgemäßen elektrischen Maschine vermieden, da anstelle einer Spule zwei symmetrisch zueinander angeordnete Teilspulen an benachbarten Kommutatorlamellen anliegen. Werden zwei benachbarte Kommutatorlamellen durch die jeweils unbestromte Bürste verbunden, tritt ein Kurzschlussstrom in beiden Teilspulen auf, sodass sich die Radialkräfte der beiden Teilspulen kompensieren.

Die beiden Teilspulen sind erfindungsgemäß derart symmetrisch zueinander angeordnet, dass bei Bestromung der Teilspulen in einem Magnetfeld im Wesentlichen keine radialen Kräfte auf den Anker wirken. Die beiden Teilspulen sind gleichzeitig kommutierbar, beispielsweise indem sie an benachbarte Kommutatorlamellen angeschlossen sind. Die resultierenden Radialkräfte werden besonders gut dadurch kompensiert, dass die beiden Teilspulen im Wesentlichen geometrisch parallel zueinander und in gleichem Abstand zur Drehachse des Ankers angeordnet sind. Außerdem lassen sich die Radialkräfte besonders gut dadurch kompensieren, dass die beiden Teilspulen gleich viele Windungen aufweisen. Die Radialkräfte lassen sich ferner besonders gut kompensieren, indem die beiden Teilspulen in umgekehrtem Wickelsinn zueinander gewickelt sind. Insbesondere handelt es sich um eine zweipolige elektrische Wicklung.

Die beiden Teilspulen können entweder elektrisch in Reihe oder parallel zueinander geschaltet sein. Bei der Reihenschaltung weisen die beiden Teilspulen zwei Enden auf, die mit benachbarten Kommutatorlamellen verbunden sind. Bei der Parallelschaltung hingegen weist jede der beiden Teilspulen zwei Enden auf, wobei jeweils die Enden einer Teilspule mit benachbarten Kommutatorlamellen verbunden sind.

In einer bevorzugten Ausführungsform weist der Kommutator eine gerade Anzahl an Lamellen auf. Weiterhin ist bevorzugt die Anzahl der Lamellen gleich der Anzahl der Ankernuten.

In einer weiteren bevorzugten Ausführungsform sind die symmetrisch angeordneten Teilspulen als Doppelwicklung mit reduziertem, z.B. mit dem halben, Spulendrahtquerschnitt in zwei Lagen ausgebildet. Dadurch kann ein erhöhter Nutfüllfaktor erzielt werden.

Die erfindungsgemäße elektrische Maschine kann insbesondere als Scheibenwischermotor in Kraftfahrzeugen eingesetzt werden.

Nachfolgend wird die Erfindung anhand der beigefügten Zeichnungen näher erläutert. Es zeigen:

Figur 1    einen schematischen Querschnitt durch eine Ausführungsform der erfindungsgemäßen elektrischen Maschine

Figur 2    eine Ausführungform eines Wickelschemas der erfmdungsgemäßen elektrischen Maschine

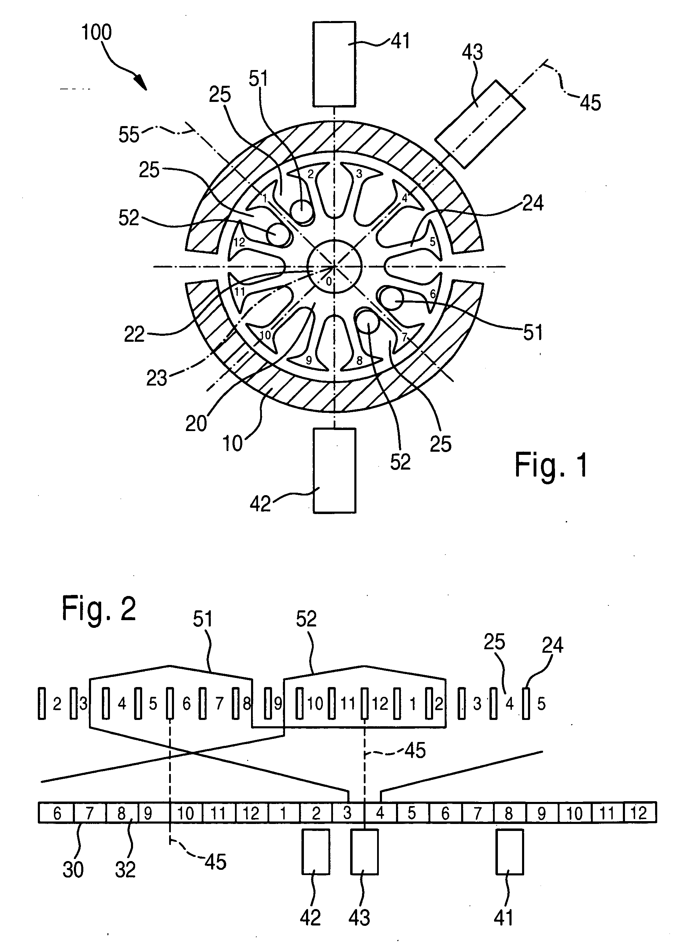

In Fig. 1 ist eine Ausführungsform der erfindungsgemäßen elektrischen Maschine 100 schematisch im Querschnitt dargestellt. Der Stator ist aus zwei Polen 10 gebildet. Innerhalb der Pole 10 ist ein Anker 20 auf einer Ankerwelle 22 mit einer Drehachse 23 drehfest gelagert. Der Anker 20 ist mit 12 Ankerzähnen 24 und 12 zwischen den Ankerzähnen 24 liegenden Ankernuten 25 ausgestattet. Außerdem ist ein Kommutator 30 mit Kommutatorlamellen 32 drehfest auf der Ankerwelle 22 befestigt (Fig. 2). Des Weiteren sind drei Bürsten 41, 42, 43 vorgesehen, wobei die erste und zweite Bürste 41, 42 zueinander diametral angeordnet sind, während die dritte Bürste 43 in Drehrichtung um einen bestimmten Winkel kleiner als 180°, hier z.B. 45°, versetzt zu der ersten Bürste 41 angeordnet ist. Die zweite Bürste 42 dient als gemeinsame Bürste oder Massebürste, indem sie bei niedrigen Drehzahlen mit der ersten Bürste 41, bei hohen Drehzahlen mit der dritten Bürste 43 zusammenwirkt.

In der dargestellten Ausführungsform gemäß Fig. 1 und 2 hat der Kommutator 30 12 Kommutatorlamellen 32 und der Anker 20 12 Ankerzähne 24 bzw. Ankernuten 25.

Eine Ankerspule ist aus jeweils zwei Teilspulen 51, 52 gebildet, die bezüglich einer Symmetrieachse 55, die durch den Mittelpunkt 23 der Drehachse 22 des Ankers 20 verläuft, symmetrisch zueinander angeordnet sind. Die Teilspulen 51, 52 sind demnach im Wesentlichen geometrisch parallel zueinander und in gleichem Abstand zur Drehachse 22 des Ankers 20 angeordnet.

Wie in Fig. 2 ersichtlich, sind die beiden Teilspulen 51, 52 mit zwei benachbarten Kommutatorlamellen 32 eines Kommutators 30 verbunden. Wenn die dritte Bürste 43 die beiden benachbarten Kommutatorlamellen 32 (in Fig. 2 Lamelle 3 und Lamelle 4) kontaktiert, werden die beiden Teilspulen 51, 52 kurzgeschlossen. Beim Kontaktieren der beiden benachbarten Kommutatorlamellen 32 bildet die dritte Bürste 43 mit dem Mittelpunkt 23 der Ankerwelle 22 eine Achse 45, welche zur Symmetrieachse 55 der beiden Teilspulen 51, 52 senkrecht steht (Fig. 1).

Das Wickelschema gemäß Fig. 2 zeigt eine teilweise Abwicklung einer ersten Ausführungsform von Ankerspulen aus zwei Teilspulen 51, 52. Die Ankerspule ist nach Art der Schleifenwicklung in Form einer Sehnenwicklung gewickelt. Die Wicklung einer ersten Teilspule 51 liegt in der mit 3 bezeichneten Ankernut 25 und der mit 8 bezeichneten Ankernut 25. Die Wicklung einer zweiten Teilspule 52 liegt in der mit 2 bezeichneten Ankernut 25 und der mit 9 bezeichneten Ankernut 25. Die beiden Enden der ersten und zweiten Teilspule 51, 52 sind mit benachbarten (hier der dritten und vierten) Kommutatorlamellen 32 elektrisch verbunden. Die beiden Teilspulen 51, 52 sind demnach in Reihe geschaltet. Die dritte und achte Ankernut 25 sowie die zweite und neunte Ankernut 25 liegen einander gegenüber, so dass die beiden Teilspulen 51, 52 bezüglich einer Achse, die durch den Mittelpunkt 23 der Ankerwelle 22 geht, symmetrisch zueinander angeordnet sind. Die beiden Teilspulen 51, 52 sind im Wesentlichen parallel zueinander angeordnet, so dass sie sich bezüglich einer parallel zu den Teilspulen 51, 52 angeordneten Symmetrieachse 55 in symmetrischer Stellung befinden. Die beiden Teilspulen 51, 52 sind in umgekehrtem Wickelsinn gewickelt.

Fig. 2 zeigt eine Ausführungsform einer Reihenschaltung der beiden Teilspulen 51, 52. Nach dem dargestellten Prinzip der Wicklung zweier symmetrisch angeordneter Teilspulen 51, 52 sind weitere Wicklungsschemata realisierbar.

**Patentansprüche**

1.  Elektrische Maschine umfassend einen Anker (20) mit Ankernuten (25) zur Aufnahme von Ankerspulen, wobei wenigstens eine Ankerspule aus zwei bezüglich einer Symmetrieachse (55), die durch den Mittelpunkt (23) der Ankerwelle (22) des Ankers (20) verläuft, symmetrisch zueinander angeordnete Teilspulen (51, 52) gebildet ist, wobei die Teilspulen (51, 52) mit zwei benachbarten Kommutatorlamellen (32) eines Kommutators (30) verbunden sind, sowie eine erste Bürste (41), eine zweite Bürste (42) und eine dritte Bürste (43), welche gleitbar an dem Kommutator (30) anliegen, wobei die zweite Bürste (42) mit der ersten Bürste (41) oder der dritten Bürste (43) zusammenwirkt, **dadurch gekennzeichnet, dass** die dritte Bürste (43) relativ zu den beiden Teilspulen (51, 52) derart angeordnet ist, dass beim Kontaktieren der beiden benachbarten Kommutatorlamellen (30) die dritte Bürste (43) mit dem Mittelpunkt (23) der Ankerwelle (22) eine Achse (45) bildet, welche zu der Symmetrieachse (55) der beiden Teilspulen (51, 52) einen Winkel von

$$90° - (180°/\text{Lamellenanzahl}) - (180°/3·\text{Lamellenanzahl})$$

bis

$$90° + (180°/\text{Lamellenanzahl}) + (180°/3·\text{Lamellenanzahl})$$

aufweist.

2. Elektrische Maschine nach Anspruch 1, **dadurch gekennzeichnet, dass** die beiden Teilspulen (51, 52) im Wesentlichen geometrisch parallel zueinander angeordnet sind.

3. Elektrische Maschine nach einem der Ansprüche 1 oder 2, **dadurch gekennzeichnet, dass** die beiden Teilspulen (51, 52) gleich viele Windungen aufweisen.

4. Elektrische Maschine nach einem der vorhergehenden Ansprüche, **dadurch gekennzeichnet, dass** die beiden Teilspulen (51, 52) in umgekehrtem Wickelsinn zueinander gewickelt sind.

5. Elektrische Maschine nach einem der Ansprüche 1-4, **dadurch gekennzeichnet, dass** die beiden Teilspulen (51, 52) elektrisch in Reihe geschaltet sind.

6. Elektrische Maschine nach Anspruch 5, **dadurch gekennzeichnet, dass** die beiden in Reihe geschalteten Teilspulen (51, 52) zwei Enden aufweisen, die mit benachbarten Kommutatorlamellen (32) verbunden sind.


**Claims**

1. Electric machine comprising an armature (20) with armature slots (25) for receiving armature coils, wherein at least one armature coil is formed from two coil elements (51, 52), which are arranged symmetrically with respect to one another with respect to an axis of symmetry (35) that passes through the centre point (23) of the armature shaft (22) of the armature (20), wherein the coil elements (51, 52) are connected to two adjacent commutator laminations (32) of a commutator (30), and a first brush (41), a second brush (42) and a third brush (43), which rest on the commutator (30) in slideable fashion, wherein the second brush (42) interacts with the first brush (41) or the third brush (43), **characterized in that** the third brush (43) is arranged relative to the two coil elements (51, 52) in such a way that, when contact is made between the two adjacent commutator laminations (30), the third brush (43) with the centre point (23) of the armature shaft (22) forms an axis (45) which has an angle of from

$$90°-(180°/\text{lamination number})-(180°/3·\text{lamination number})$$

to

$$90°+(180°/\text{lamination number})+(180°/3·\text{lamination number})$$

with respect to the axis of symmetry (55) of the two coil elements (51, 52).

2. Electric machine according to Claim 1, **characterized in that** the two coil elements (51, 52) are arranged substantially geometrically parallel to one another.

3. Electric machine according to either of Claims 1 and 2, **characterized in that** the two coil elements (51, 52) have an equal number of turns.

4. Electric machine according to one of the preceding claims, **characterized in that** the two coil elements (51, 52) are wound with the opposite winding direction to one another.

5. Electric machine according to one of Claims 1-4, **characterized in that** the two coil elements (51, 52) are connected electrically in series.

6. Electric machine according to Claim 5, **characterized in that** the two coil elements (51, 52) connected in series have two ends, which are connected to adjacent commutator laminations (32).


**Revendications**

1. Machine électrique comprenant un induit (20) muni de rainures d'induit (25) pour accueillir des bobines d'induit, au moins une bobine d'induit étant formée par deux bobines partielles (51, 52) disposées de manière symétrique l'une par rapport à l'autre par rapport à un axe de symétrie (55) qui passe par le point central (23) de l'arbre d'induit (22) de l'induit (20), les bobines partielles (51, 52) étant reliées avec deux lamelles de collecteur (32) voisines d'un collecteur (30), ainsi qu'un premier balai (41), un deuxième balai (42) et un troisième balai (43), lesquels reposent de manière à pouvoir glisser sur le collecteur (30), le deuxième balai (42) interagissant avec le premier balai (41) ou le troisième balai (43), **caractérisée en ce que** le troisième balai (43) est disposé de telle sorte par rapport aux deux bobines partielles (51, 52), que lors de l'établissement du contact avec les deux lamelles de collecteur (30) voisines, le troisième balai (43) forme avec le point central (23) de l'arbre d'induit (22) un axe (45) qui présente, par rapport à l'axe de symétrie (55) des deux bobines partielles (51, 52), un angle de

```
90°  -  (180°/nombre  de  lamelles)  -  (180°/3·nombre  de
lamelles)
```

à

```
90°  +  (180°/nombre  de  lamelles)  +  (180°/3·nombre  de
lamelles).
```

2. Machine électrique selon la revendication 1, **caractérisée en ce que** les deux bobines partielles (51, 52) sont disposées pour l'essentiel géométriquement parallèlement l'une à l'autre.

3. Machine électrique selon l'une des revendications 1 ou 2, **caractérisée en ce que** les deux bobines partielles (51, 52) présentent les mêmes nombres de spires.

4. Machine électrique selon l'une des revendications précédentes, **caractérisée en ce que** les deux bobines partielles (51, 52) sont bobinées en sens inverse l'une de l'autre.

5. Machine électrique selon l'une des revendications 1 à 4, **caractérisée en ce que** les deux bobines partielles (51, 52) sont branchées en série.

6. Machine électrique selon la revendication 5, **caractérisée en ce que** les deux bobines partielles (51, 52) branchées en série présentent deux extrémités qui sont reliées avec des lamelles de collecteur (32) voisines.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005076442 A